Europäisches Patentamt

European Patent Office

Office européen des brevets

(19)

(11) Publication number: **0 174 715**
**B1**

# (12) EUROPEAN PATENT SPECIFICATION

(45) Date of publication of patent specification: **02.05.90**

(51) Int. Cl.⁵: **B 64 G 1/36,** G 05 D 1/08

(21) Application number: **85304275.2**

(22) Date of filing: **14.06.85**

(54) Attitude angle calculation apparatus for a geostationary satellite.

(30) Priority: **13.09.84 JP 192252/84**

(43) Date of publication of application:
**19.03.86 Bulletin 86/12**

(45) Publication of the grant of the patent:
**02.05.90 Bulletin 90/18**

(84) Designated Contracting States:
**DE FR GB**

(56) References cited:
**DE-A-3 417 661**
**US-A-4 071 211**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Izumida, Kiichiro c/o Mitsubishi Denki K.K.**
**Kamakura Works No. 325, Kamimachiya**
**Kamakura-shi Kanagawa (JP)**
Inventor: **Kasai, Ritaro c/o Mitsubishi Denki K.K.**
**Kamakura Works No. 325, Kamimachiya**
**Kamakura-shi Kanagawa (JP)**

(74) Representative: **Jackson, Peter Arthur et al**
**GILL JENNINGS & EVERY 53-64 Chancery Lane**
**London WC2A 1HN (GB)**

Courier Press, Leamington Spa, England.

# EP 0 174 715 B1

**Description**

This invention relates to an attitude angle calculation apparatus for use in precisely controlling the attitude of a geostationary satellite, more particularly an earth-directed satellite the attitude of which is controlled with respect to the earth in three orthogonal axes.

For an earth surveillance satellite or a communications satellite, in order to maintain a predetermined orientation of an antenna or measuring device with respect to the earth, it is necessary to align a specified axis of the satellite with a straight line connecting the satellite and the earth.

An attitude angle calculation apparatus is used to calculate the angular relationship of a coordinate system of the satellite with respect to a line connecting the satellite and the earth and a line orthogonal to a plane including the orbit of the satellite. An attitude control device controls the attitude angle of the satellite so that the result of the calculation performed by the attitude angle calculation apparatus becomes zero, to thereby maintain a predetermined axis of the satellite directed towards an object.

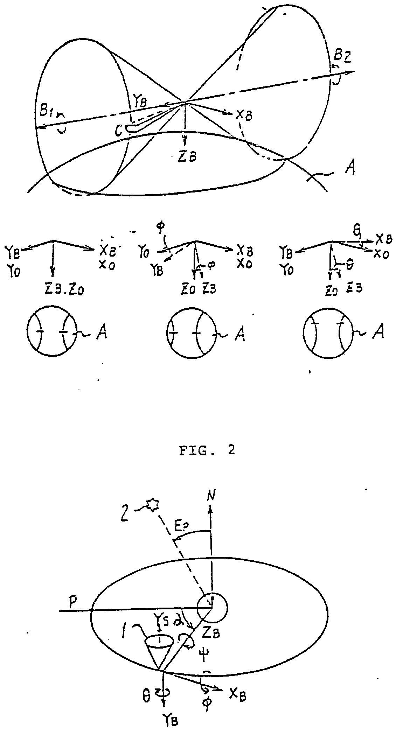

Referring to Fig. 1 of the accompanying drawings, typically a conventional attitude angle calculation apparatus operates to detect relative deviation angles $\phi$ and $\theta$ of the $Z_B$ axis of the satellite, which is to be directed to the earth A, from the orbital coordinate system $(X_O, Y_O, Z_O)$ measured by an earth sensor mounted on the satellite. In detail, the roll angle $\phi$, which is the angle of rotation of the $Z_B$ axis of the satellite about its $X_B$ axis from the $Z_O$ axis of the orbital coordinate system, is detected by the earth sensor on the basis of the difference of a scanning width defined by fields of sight $B_1$ and $B_2$ of the earth sensor, and the pitch angle $\theta$, which is the angle of rotation of the $Z_B$ axis of the satellite about its $Y_B$ axis, on the basis of the amount of deviation of a reference pulse having a transmitting direction c, measured from the centre of the scanning pulse. However, in such a conventional attitude angle calculation apparatus, it is impossible to measure the yaw angle $\psi$, which is the angle of rotation of the satellite about its axis $Z_B$.

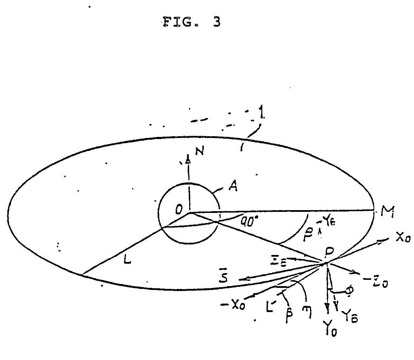

In order to overcome this problem, it has been proposed to measure the yaw angle $\psi$ by using a fixed-star sensor mounted on the satellite. Fig. 2 shows the concept of such a proposal in which the star Polaris 2 ($\alpha$-Urae Monalis) is detected by the fixed-star sensor directed along the $-Y_B$ axis of the satellite such that a center of the field of sight 1 of the fixed-star sensor is directed to Polaris 2. Assuming coordinates (Z, X) of Polaris 2 in the field of sight 1 of the fixed-star sensor, the yaw angle $\psi$ can be calculated as follows (provided that the satellite is in a stationary orbit) with the roll deviation and the pitch deviation always being zero, and the tilt of the orbit also being zero:

$$\psi = -(X + E_p \sin \alpha), \quad \alpha \varepsilon [0, 2\pi], \tag{1}$$

where $E_p$ is the declination of Polaris 2 and $\alpha$ is the difference between the right ascension of Polaris 2 and the right ascension of the satellite. Since, however, it is difficult for a practical satellite to maintain the angles $\theta$ and $\phi$ and the tilting of the orbit at zero, the non-zero angles $\theta$ and $\phi$ and the orbital conditions of the satellite affect the measured value (Z, X) of the fixed star, and it is impossible to separate them from each other. Therefore, it is impossible to measure the yaw angle $\psi$ precisely.

In another approach, a sun sensor is used as the fixed-star sensor. The sun sensor is mounted on the satellite with the field of sight thereof being in coincidence with the $-X_B$ axis of the satellite. In this case, the variation $\Delta\eta$ of the angle of incidence $\eta$ of the sun is detected.

Fig. 3 shows the concept of the latter. In Fig. 3, reference characters I, O, N, L, M, $\beta$ and L' depict the orbital plane, the center of the earth A, a direction normal to the orbital plane, a cross line of a plane including a vector $\bar{S}$ in the direction of the sun and a line ON and the orbital plane 1, a point in the orbital plane 1 separated from the line L by 90°, an angle between a line OM and a line from the center O to a point P on the orbit, and a line parallel to the line L in a $(X_O, Z_O)$ plane, respectively.

As is clear from Fig. 3, when $\beta = 0$, i.e., the sun is always in the $X_O, Y_O$ plane, and assuming that the angle of incidence $\eta$ is 0 at a certain time instant, the deviation $\Delta\eta$ thereof after the time instant coincides with a deviation $\Delta\psi$ of the yaw angle. That is, the roll angle $\phi$ is completely separated from the deviation $\Delta\eta$. However, for a practical satellite, since the sun is out of the $X_O, Y_O$ plane due to the orbital movement of the satellite, the variation $\Delta\phi$ of the roll angle $\phi$ about the $X_O$ axis of the satellite affects $\Delta\eta$ unseparably, causing precise measurement of yaw angle deviation $\Delta\eta$ to be impossible (although there is no interference between the pitch angle $\theta$ and $\Delta\eta$).

It is known from US—A—4071211 to provide an attitude angle calculation apparatus, to be mounted on a satellite for calculating an attitude angle of the satellite, comprising an earth sensor for detecting deviation of an angle defined between a predetermined axis of the satellite and a straight line connecting the satellite and the geocentre of the earth; a sun sensor for detecting a physical intermatrix of the sun; and yaw angle determination means responsive to orbital position information of the satellite sent from a ground station and to outputs of the earth sensor and the sun sensor to determine the yaw angle of the satellite independently of roll angle and/or pitch angle thereof, such an attitude angle calculation apparatus being acknowledged in the preamble to the present independent claim and being referred to hereinafter as an attitude angle calculation apparatus of the kind described.

An object of the present invention is to provide an attitude angle calculation apparatus by which the yaw angle can be obtained with high precision.

2

According to the present invention, an attitude angle calculation apparatus of the kind described is characterised in that the yaw angle determination means comprises a register for storing positional information of the satellite and its orbit received from the ground station as a command signal; initial correction calculating means responsive to the positional information stored in the register and an output of the earth sensor at a time instant at which the command signal is transmitted for calculating an initial value of correction; a timer; orbital position calculating means responsive to the positional information stored in the register and an output of the timer for calculating an angular relation between the satellite and the sun; the sun sensor measuring a relative variation of an incident angle of the sun; correction amount calculating means responsive to outputs of the earth sensor, the orbital position calculating means and the initial correction calculating means for calculating a correction amount sequentially; and yaw angle deviation calculation means responsive to outputs of the sun sensor, the orbital position calculating means and the correction amount calculating means for calculating deviation of yaw attitude angle of the coordinates of the satellite axis with respect to the orbital coordinates.

An embodiment of the invention will now be described, by way of example, with reference to the accompanying drawings, in which:—

Figure 1 illustrates the above-described concept of measurement of the roll angle and the pitch angle by an earth sensor;

Figure 2 depicts the above-described concept of yaw angle measurement by a fixed-star sensor;

Figure 3 shows a positional relation between the sun and a satellite and illustrates the above-described concept of interference between yaw angle deviation and the roll angle;

Figure 4 is a schematic block diagram of an attitude angle calculation apparatus of background interest to the present invention;

Figure 5 depicts a mathematical model showing the relationship between inertial space coordinates and orbital coordinates for use in explaining the apparatus of Figure 4;

Figure 6 is a schematic block diagram of another attitude angle calculation apparatus of background interest to the present invention;

Figure 7 is a similar model to that shown in Figure 5 for use in explaining the apparatus of Figure 6;

Figure 8 is a mathematical model showing the relationship between geocentric inertial coordinates and the position of the sun for use in explaining the apparatus of Figure 6; and

Figure 9 is a schematic block diagram of an embodiment of the present invention.

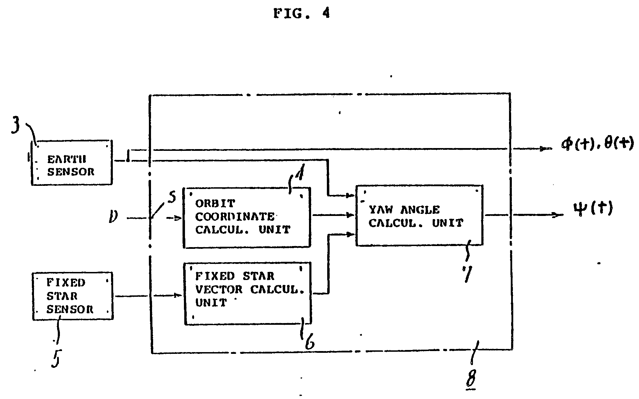

Referring to Figure 4 of the drawings, an attitude angle calculation apparatus includes an earth sensor 3, a fixed-star sensor 5, and an attitude angle calculation unit 8 comprising an orbit coordinate calculation unit 4, a fixed-star vector calculation unit 6, a yaw angle calculation unit 7, and a command signal ON/OFF switch S.

The orbit coordinate calculation unit 4 calculates orbital coordinates of the satellite at an arbitrary time instant using orbital information D transmitted from a ground station as a command signal. The fixed star vector calculation unit 6 receives data from the fixed star sensor 5 and calculates therefrom a unit vector in the direction to a fixed star with respect to the coordinates of the axis of the satellite. The yaw angle calculation unit 7 receives the orbital coordinates calculated by the orbit coordinate calculation unit 4, the unit vector of the fixed star under observation as calculated by the fixed-star vector calculation unit 6, and data $\phi(t)$, $\theta(t)$ from the earth sensor 3 and calculates the yaw angle $\psi(t)$ of the coordinates of the satellite axis with respect to the orbital coordinates.

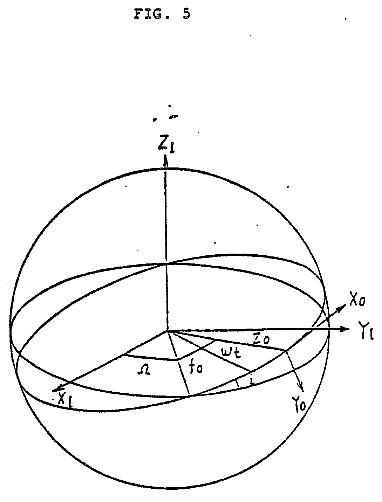

Figure 5 depicts a mathematical model showing the relation of the orbital coordinates $(X_0, Y_0, Z_0)$ to the inertial space coordinates $(X_I, Y_I, Z_I)$. It is assumed that the ascending node right ascension, the orbital tilting, the period, and the ascending node separation angle at a time instant $t_0$ are given as the orbital information D from the ground command by $\Omega$, $i$, $J$ and $f_0$, respectively.

In this case, the orbital coordinates are given by the following equation:

$$\begin{bmatrix} X_0 \\ Y_0 \\ Z_0 \end{bmatrix} = \begin{bmatrix} -\sin f \cos \Omega -\cos i \sin \Omega \cos f & -\sin f \sin \Omega +\cos i \cos \Omega \cos f & \cos f \sin i \\ -\sin i \sin \Omega & \sin f \cos \Omega & -\cos i \\ -\sin f \cos \Omega +\cos i \cos \Omega \cos f & \cos f \cos \Omega -\cos i \cos \Omega \cos f & \sin \Omega \sin i \end{bmatrix} \begin{bmatrix} X_I \\ Y_I \\ Z_I \end{bmatrix}$$

$$= [_0 C_I] \ [X_I, \ Y_I, \ Z_I]^T \tag{2}$$

T: transposition

$$f = f_0 + 2\pi(t-t_0)/T \tag{3}$$

The orbital coordinate calculation unit 4 performs its operation according to equations 2 and 3 to derive the orbital coordinates.

Describing the operation of the fixed star vector calculation unit 6, the fixed star sensor 5 is mounted on the satellite with its optical axis $Y_S$ being in coincidence with the $-Y_B$ axis of the satellite, as shown in Figure 2. A fixed star detection level of the sensor 5 is set at a stellar magnitude of a star which is higher than third stellar magnitude, and the field of sight of the sensor 5 is selected as on the order of $4° \times 4°$. With these conditions, the sensor 5 mounted on a stationary satellite directed to the earth A can detect only Polaris 2. Assuming that the coordinates of the fixed star observed by the fixed star sensor 5 are $(Z, X)$, the unit vector $S(f)$ in the direction to Polaris 2 with respect to $X_B$, $Y_B$ and $Z_B$ of the satellite is given by the following equation:

$$S(f) = \begin{bmatrix} S_1 \\ S_2 \\ S_3 \end{bmatrix} = [_BC_s] \begin{bmatrix} \cos Z & \sin X \\ \cos Z & \cos X \\ \sin Z \end{bmatrix}, \tag{4}$$

where $[_BC_s]$ is a coordinate transformation matrix determined by the relation between the fixed star sensor coordinates system and the coordinate axis of the satellite, which matrix can be obtained preliminarily.

The yaw angle calculation unit 7 receives $[_0C_I]$ obtained from equation 2, the fixed star direction unit vector obtained by the equation 4, and the roll angle $\phi(t)$ and the pitch angle $\theta(t)$ measured by the earth sensor 3 and calculates the yaw angle $\psi$ according to the following equation:

$$\sin \psi = (S_2 b_1 - a_3 b_1 - S_3 b_2 + a_2 B_3)/(a_1 b_1 - a_2 b_2) \tag{5}$$

where

$$
\begin{aligned}
a_1 &= -\int_1^c \cos \phi(t) \\
a_2 &= \int_2^c \cos \phi(t) \\
a_3 &= \int_3^c \sin \phi(t) \\
b_1 &= \int_1^c \sin \theta(t) - \int_2^c \sin \phi(t) \cos \theta(t) \\
b_2 &= \int_1^c \sin \phi(t) \cos \theta(t) + \int_2^c \sin \theta(t) \\
b_3 &= \int_3^c \cos \phi(t) \cos \theta(t)
\end{aligned}
\tag{6}
$$

$$\begin{bmatrix} \int_1^c \\ \int_2^c \\ \int_3^c \end{bmatrix} = [_0C_I] \begin{bmatrix} \cos RAS \cos DIS \\ \sin RAS \cos DIS \\ \sin DIS \end{bmatrix}, \tag{7}$$

where RAS and DIS are, respectively, the right ascension and declination by the fixed star (Polaris 2) under measurement of the fixed star sensor 5, which are obtained preliminarily.

According to this apparatus, the yaw angle can be obtained by performing operations to obtain $[\int_1^c, \int_2^c, \int_3^c]$ by inserting the output $[_0C_I]$ of the orbital coordinates calculation unit 4 into equation 7, obtaining $a_i$ and $b_i$ ($i=1, 2, 3$) by inserting the value of $[\int_1^c, \int_2^c, \int_3^c]$ thus obtained and the values $(\phi, \theta)$ obtained by the earth sensor 3 into equation 6, and calculating the desired yaw angle $\psi$ by inserting $a_i$ and $b_i$ thus obtained and the components $(S_2, S_3)$ of the unit vector $S(f)$ calculated in the fixed star vector calculation unit 6 into equation (5).

According to this apparatus, the yaw angle $\psi$ of the satellite can be obtained precisely by using the data from the fixed star sensor 5, regardless of whether or not the output $(\phi, \theta)$ of the attitude angle calculator 8 is nearly equal to zero or whether or not the orbital tilting of the satellite is nearly equal to zero.

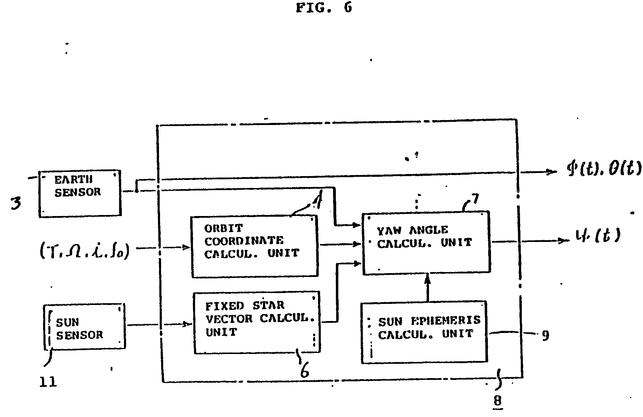

Figure 6 shows another apparatus in which the sun is used as the fixed star and a sun ephemeris calculator 9 is added to the attitude calculator 8. Other components are the same as or similar to those used in the embodiment shown in Figure 4 and are thus depicted by the same reference numerals as those used in Figure 4.

With this arrangement, an orbital coordinates calculator 4 calculates the orbital coordinates of the satellite at an arbitrary time instant as described with reference to Figure 4. A fixed star vector calculator 6, a sun vector calculator in this case, receives data from a fixed star sensor, in this case a sun sensor 11, and calculates a unit vector in the direction toward the sun with respect to the coordinate axes of the satellite. A sun ephemeris calculator 9 operates to calculate the declination and right ascension of the sun in the direction to the sun with respect to geocentric inertial coordinates at the time instant at which the sun sensor 11 detects the sun. A yaw angle calculator 7 receives the unit vector in the direction to the sun given by the sun vector calculator 6, the orbital coordinates calculated by the orbital coordinate calculator 4, the declination and right ascension of the sun given by the sun ephemeris calculator 9, and the data given by the earth sensor 3 to calculate the yaw angle of the satellite with respect to the orbital coordinates system.

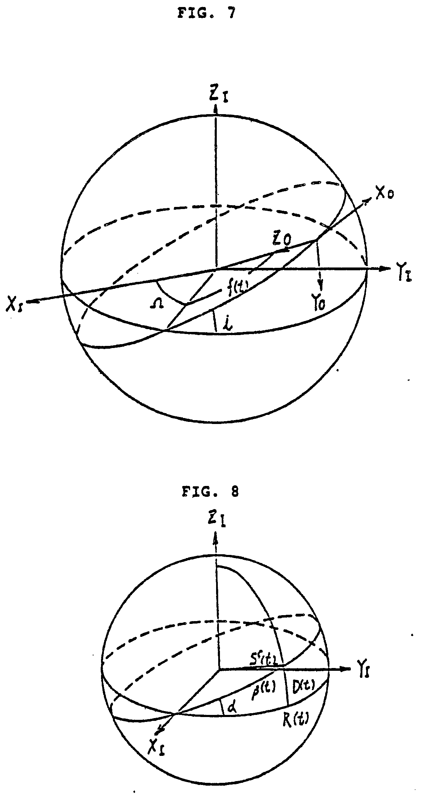

Figure 7 depicts a mathematical model giving the relation of the orbital coordinate system $(X_0, Y_0, Z_0)$ to the geocentric inertial coordinate system $(X_I, Y_I, Z_I)$. The right ascension $\Omega$ at the ascending node, the orbital tilting i, the period T and the ascending node deviation angle $f_0$, all at the time instant $t_0$, are here assumed as being given by the orbital information contained in the ground command. The orbital coordinates at this time are given by:

4

$$\begin{bmatrix} X_o \\ Y_o \\ Z_o \end{bmatrix} = \begin{bmatrix} -\sin f \cos \Omega & -\sin f \sin \Omega & \cos f \sin i \\ -\cos i \sin \Omega \cos f & +\cos i \cos \Omega \cos f & \\ -\sin i \sin \Omega & \sin f \cos \Omega & -\cos i \\ -\sin f \cos \Omega & \cos f \cos \Omega & \sin \Omega \sin i \\ +\cos i \cos \Omega \cos f & -\cos i \cos \Omega f & \end{bmatrix} \begin{bmatrix} X_I \\ Y_I \\ Z_I \end{bmatrix}$$

$$= [_oC_I] \; [X_I, \; Y_I, \; Z_I]^T \tag{8}$$

where T indicates transposition.

$$f = f_0 + 2\pi(t - t_0)/T \tag{9}$$

The above operations are performed by the orbital coordinates calculator 4.

The operations performed by the sun vector calculator 6 will now be described with the assumption that a two-axis sun sensor of a commonly used type is available on the satellite. The two-axis sun sensor measures an azimuth angle g and an ascending vertical angle b of the sun with respect to the coordinate system of the sun sensor on the satellite, as is well known. Therefore, the unit vector S(t) in the direction to the sun with respect to the satellite axis coordinates system is as given below:

$$S(t) = \begin{bmatrix} S_1 \\ S_2 \\ S_3 \end{bmatrix} = [_BC_S] \begin{bmatrix} \cos g \cos b \\ \sin g \cos b \\ \sin b \end{bmatrix}, \tag{10}$$

where $[_BC_S]$ is a coordinate transformation matrix based on the relation between the sun sensor coordinate system and the satellite axis coordinate system, which is known. The sun vector calculator 6 performs the above operation to determine the unit vector S(t).

The operation of the sun ephemeris calculator 9 will now be described with reference to Figure 8, which illustrates a mathematical model showing the relation between the sun and the geocentric inertial coordinate system. In Figure 8, the right ascension R(t) and the declination D(A) of the sun are given as follows:

$$\sin D(t) = \sin \alpha \sin \beta(t) \tag{11}$$

$$\cos R(A) = \cos \beta(t)/\cos D(t) \tag{12}$$

where
  $\alpha = 0.409$ (rad).
  $t = 0.0172 \times D$,
where D is the number of days counted from the equinox time of the year in which the satellite is launched to the current time.

The yaw angle calculator 7 receives the unit vector obtained according to equation 10, the right ascension and declination of the sun obtained from equations 11 and 12, and the roll angle $\phi(t)$ and the pitch angle $\theta(t)$ measured by the earth sensor 3 to calculate the yaw angle $\Omega$ according xo the following equations:

$$\sin \psi = (S_2 b, -a_3 b_1 - S_3 b_2 + a_2 b_3)/(a_1 b_1 - a_2 b_2) \tag{13}$$

where

$$\begin{aligned}
a_1 &= -\int_1^c \cos \phi(t) \\
a_2 &= \int_2^c \cos \phi(t) \\
a_3 &= \int_3^c \cos \phi(t) \\
b_1 &= \int_1^c \sin \theta(t) - \int_2^c \sin \phi(t) \cos \theta(t) \\
b_2 &= \int_1^c \sin \phi(t) \cos \theta + \int_2^c \sin \theta(t) \\
b_3 &= \int_3^c \cos \phi(t) \cos \theta(t)
\end{aligned} \tag{14}$$

$$\begin{bmatrix} \int_1^c \\ \int_2^c \\ \int_3^c \end{bmatrix} = [_oC_I] \begin{bmatrix} \cos R(t) & \cos D(t) \\ \sin R(t) & \cos D(t) \\ \sin D(t) & \end{bmatrix} \tag{15}$$

According to this apparatus, the yaw angle $\psi$ can be determined by inserting the output $[_oC_I]$ of the orbital coordinate calculator 4 and the outputs R(t) and D(t) of the sun ephemeris calculator 9 into equation 15 to obtain $[\int_1^c, \int_2^c, \int_3^c]$, inserting $[\int_1^c, \int_2^c, \int_3^c]$ and the angles $\phi$ and $\theta$ measured by the earth sensor 3 into the equation 14 to obtain $a_i$, $b_i$ ($i=1, 2, 3$), and inserting $a_i$, $b_i$ and the component $(S_2, S_3)$ of the unit vector $S(t)$ calculated by the sun vector calculator 6 into equation 13.

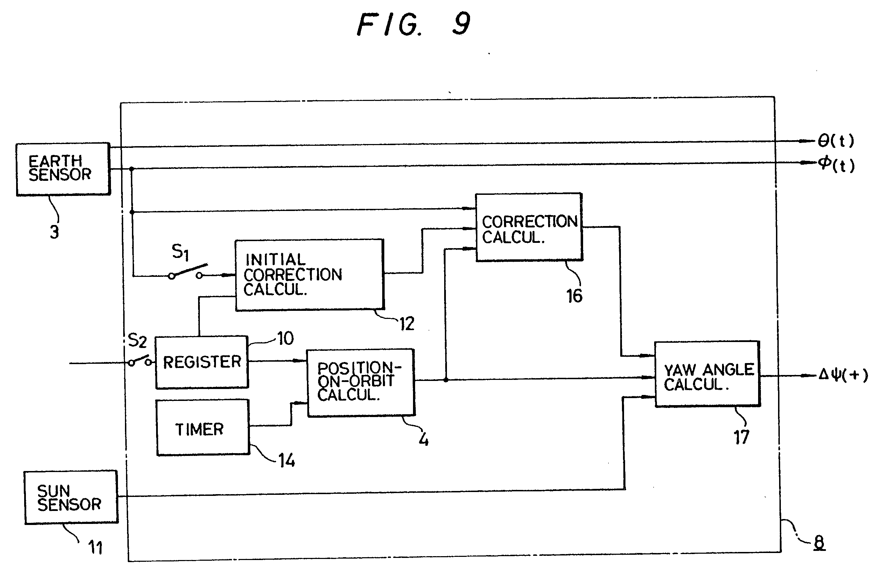

Figure 9 shows an embodiment of the present invention. cn Figure 9, a register 10 stores positional information $\beta_0$ of the satellite which is contained in the command signal transmitted from the ground station, and an initial correction calculator 12 receives the positional information $\beta_0$ stored in the register 10 and data from the earth sensor 3 to obtain an initial value of a correction to be added to the data from the sun sensor 11. That is, the initial correction calculator 12 reads out the content $\beta_0$ of the register 10, which gives the angular relation of the position of the satellite in a plane 1 (Figure 3) with respect to the sun at the time $t_0$ and the roll angle $\phi(0)$ measured by the earth sensor 3 at the same time $t_0$ and operates to obtain the initial correction $a_0$ according to the following equation:

$$a_0 = \phi(0') \sin \beta_0. \tag{16}$$

A correction amount calculator 16 receives the data from the earth sensor 3, the initial correction $a_0$ from the initial correction calculator 12, and the angular relation between the satellite and the sun given by the orbital position calculator 4, and from them calculates the amount of correction to be added sequentially to the data from the sun sensor 11.

The orbital position calculator 4 reads a time signal $\Delta t$ from a timer 14 and the content $\beta_0$ of the register 10 to calculate the angular relation $\beta(\Delta t)$ between the satellite and the sun according to the following equation:

$$\beta(\Delta t) = \beta_0 + \omega_0 \Delta t, \tag{17}$$

where $\Delta t$ is the time from the time constant to $t_0$ and $\omega_0$ is the angular velocity of the satellite in its orbit (which is 0.25°/min when the satellite is geostationary).

Thus, the correction calculator 16 receives $a_0$ from the initial correction calculator 12 and $\beta(\Delta t)$ from the orbital position calculator 4 to determine a correction $\Delta\phi(\Delta t)$ according to the following equations:

$$\Delta\phi(\Delta t) = a_1 - a_0 \tag{18}$$

$$a_1 = \phi(\Delta t) \sin \beta(\Delta t). \tag{19}$$

The yaw angle deviation calculator 17 receives the correction amount $\Delta\phi(\Delta t)$ obtained according to equation 18, $\beta(\Delta t)$ obtained according to equation 17, and a variation $\Delta\eta(\Delta t)$ of the sun incident angle $\eta$ with $\eta(t_0)$ at time $t_0$ being zero, which is measured by the sun sensor 11, to calculate a yaw angle deviation $\Delta\psi(\Delta t)$ according to the following equation:

$$\Delta\psi(\Delta t) = [\Delta\zeta(\Delta t) + \Delta\phi(\Delta t)]/\cos \beta(\Delta t). \tag{20}$$

As mentioned hereinbefore, according to the present invention, the yaw angle of the satellite or the deviation thereof can be precisely determined regardless of the roll angle $\phi$, the pitch angle $\theta$ of the satellite, the orbital tilting i thereof, and/or the angular relation $\beta$ between the satellite and the sun.

**Claim**

Attitude angle calculation apparatus, to be mounted on a satellite for calculating an attitude angle of the satellite, comprising:
an earth sensor (3) for detecting deviation of an angle ($\phi(t)$) defined between a predetermined axis ($Z_B$) of the satellite and a straight line (PO) connecting the satellite and the geocentre of the earth (A); a sun sensor (11) for detecting a physical intermatrix of the sun; and yaw angle determination means responsive to orbital position information of the satellite sent from a ground station and to outputs of the earth sensor (3) and the sun sensor (11) to determine the yaw angle ($\psi(t)$) of the satellite independently of roll angle ($\phi(t)$) and/or pitch angle ($\theta(t)$) thereof;

characterised in that the yaw angle determination means comprises a register (10) for storing positional information of the satellite and its orbit received from the ground station as a command signal; initial correction calculating means (12) responsive to the positional information stored in the register and an output of the earth sensor (3) at a time instant at which the command signal is transmitted for calculating an initial value of correction; a timer (14); orbital position calculating means (4) responsive to the positional information stored in the register (10) and an output of the timer (14) for calculating an angular relation between the satellite and the sun; the sun sensor (11) measuring a relative variation of an incident angle of the sun; correction amount calculating means (16) responsive to outputs of the earth sensor (3), the orbital position calculating means (4) and the initial correction calculating means (12) for calculating a correction amount sequentially; and yaw angle deviation calculating means (17) responsive to outputs of the sun sensor (11), the orbital position calculating means (4) and the correction amount calculating means (16) for calculating deviation of yaw attitude angle of the coordinates of the satellite axis with respect to the orbital coordinates.

**Patentanspruch**

Neigungswinkelrechner, der an einem Satelliten zum Rechnen des Neigungswinkels des Satelliten angebracht ist, umfassend:

einen Erdsensor (3) zum Ermitteln einer Abweichung eines Winkels ($\varphi(t)$), der zwischen einer vorbestimmten Achse ($Z_B$) des Satelliten und einer den Satelliten und das Geozentrum der Erde (A) verbindenden, geraden Linie definiert ist; einen Sonnensensor (4) zum Ermitteln einer physikalischen Zwischenmatrize der Sonne; und eine Einrichtung zum Bestimmen eines Gierwinkels, die auf von einer Erdstation gesendeten Bahnpositionsinformation des Satelliten und auf Ausgangssignale des Erdensors (3) und des Sonnensensors (11) anspricht, um den Gierwinkel ($\psi(t)$) des Satelliten unabhängig von dessen Rollwinkel ($\varphi(t)$) und/oder Steigungswinkel ($\theta(t)$) zu bestimmen;

dadurch gekennzeichnet, daß die Einrichtung zum Bestimmen des Gierwinkels ein Register (10) zum Speichern der von der Erdstation als Befehlssignal empfangenen Positionsinformation des Satelliten und dessen Bahn enthält; eine Einrichtung (12) zum Errechnen der anfänglichen Korrektur, die auf der in dem Register gespeicherten Positionsinformation und eines Ausgangssignals des Erdsensors (3) zu einem Zeitpunkt anspricht, wenn das Befehlssignal zum Errechnen eines anfänglichen Korrekturwerts übermittelt wird; einen Zeitgeber (14); eine Einrichtung (4) zum Errechnen der Bahnposition, die auf die in dem Register (10) gespeicherte Positionsinformation und ein Ausgangssignal des Zeitgebers (14) zum Errechnen eines Winkelverhältnisses zwischen dem Satelliten und der Sonne anspricht; wobei der Sonnensensor (11) eine relative Variation des Einfallswinkels der Sonne mißt; eine Einrichtung (16) zum Errechnen des Korrekturbetrages, die auf Ausgangssignale des Erdsensors (3), der Einrichtung (4) zum Errechnen der Bahnposition und der Einrichtung (12) zum Berechnen der anfänglichen Korrektur anspricht, um einen Korrekturbetrag aufeinanderfolgend zu berechnen; und eine Einrichtung (17) zum Errechnen der Gierwinkelabweichung, die auf Ausgangssignale des Sonnensensors (11), der Einrichtung (4) zum Errechnen der Bahnposition und der Einrichtung (16) zum Errechnen des Korrekturbetrages anspricht, um die Abweichung des Gierneigungswinkels der Koordinaten der Satellitenachse in bezug auf die Bahnkoordinaten zu errechnen.

**Revendication**

Appareil de calcul de position angulaire, à monter sur un satellite pour calculer la position angulaire du satellite, comprenant:

un détecteur orienté vers la Terre (3) pour détecter la déviation d'un angle ($\varphi(t)$) défini un axe prédéterminé ($Z_B$) du satellite et une ligne droite (PO) reliant le satellite et le repère géocentrique de la Terre (A); un détecteur orienté vers le Soleil (11) pour détecter une intermatrice physique du Soleil; et un moyen de détermination d'angle de lacet réagissant à des informations de position orbitale du satellite envoyées par une station au sol et aux signaux de sortie du détecteur de Terre (3) et du détecteur de Soleil (11) pour déterminer l'angle de lacet ($\psi(t)$) du satellite indépendamment de l'angle de roulis ($\varphi(t)$) et/ou de l'angle de tangage ($\theta(t)$) de celui-ci;

caractérisé en ce que le moyen de détermination d'angle de lacet comprend un registre (10) pour mémoriser les informations de position du satellite et de son orbite reçues de la station au sol comme signal de commande; un moyen de calcul de correction initiale (12) réagissant aux informations de position mémorisées dans le registre et à un signal de sortie du détecteur de Terre (3) à un instant dans le temps où le signal de commande est émis pour calculer une valeur initiale de correction; une horloge (14); un moyen de calcul de position orbitale (4) réagissant aux informations de position mémorisées dans le registre (10) et à un signal de sortie de l'horloge (14) pour calculer une relation angulaire qui existe entre le satellite et le Soleil; le détecteur de Soleil (11) mesurant une variation relative d'un angle incident du Soleil; un moyen de calcul de quantité de correction (16) réagissant aux signaux de sortie du détecteur de Terre (3), du moyen de calcul de position orbitale (4) et du moyen de calcul de correction initiale (12) pour calculer séquentiellement une quantité de correction; et un moyen de calcul de déviation d'angle de lacet (17) réagissant aux signaux de sortie du détecteur de Soleil (11), du moyen de calcul de position orbitale (4) et du moyen de calcul de quantité de correction (16) pour calculer la déviation de l'angle d'orientation de lacet des coordonnées de l'axe du satellite par rapport aux coordonnées orbitales.

FIG. 2

FIG. 3

EP  0 174 715  B1

FIG. 4

FIG. 4 — Block diagram: EARTH SENSOR (3), ORBIT COORDINATE CALCUL. UNIT (4), YAW ANGLE CALCUL. UNIT (7), FIXED STAR VECTOR CALCUL. UNIT (6), FIXED STAR SENSOR (5). Outputs $\phi(t), \theta(t)$ and $\psi(t)$.

3

FIG. 5

FIG. 6

FIG. 7

FIG. 8

FIG. 9